# FASCICULE DE BREVET EUROPEEN

(11) **EP 2 384 970 B1**
(45) Date de publication et mention de la délivrance du brevet: **21.11.2012**
(21) Numéro de dépôt: 11165081.8
(22) Date de dépôt: 06.05.2011
(51) Int. Cl.: B64C 13/28, B64C 13/42

(54) **Système de commande d'organe de vol, dispositif de commande de vol incluant un tel système, et utilisation d'un tel système**
Flugsteuerungssystem, dieses System enthaltende Flugzeugsteuerungsvorrichtung, und Verwendung dieses Systems
Flight control system, flight control device comprising said system, and use of said system

(30) Priorité: 06.05.2010 FR 1053543
(43) Date de publication de la demande: 09.11.2011
(73) Titulaire: SKF Aerospace France, 26240 Saint-Vallier-sur-Rhône (FR)
(72) Inventeur: Bouillot, Franck, 26000, Valence (FR); Milord, Cédric, 26300, Marches (FR)
(74) Mandataire: Myon, Gérard Jean-Pierre

(56) Documents cités:
- EP-A1- 1 726 935
- EP-A1- 1 972 549
- DE-C1- 4 332 137
- US-A- 4 364 279
- US-A- 5 811 738

## Description

La présente invention concerne un système de commande d'organe de vol. L'invention concerne également un dispositif de commande de vol incluant un tel système. Enfin, l'invention concerne l'utilisation d'un tel système pour remplacer un système préexistant.

En particulier, l'invention est destinée à être mise en oeuvre sur la voie de charge secondaire d'un actionneur de commande de vol d'aéronef, par exemple un actionneur de type THSA (« Trimmable Horizontal Stabilizer Actuator »), qui est destiné à la commande de la gouverne de profondeur, c'est-à-dire l'inclinaison de la queue de l'aéronef par rapport au nez de l'aéronef.

De manière connue, un tel actionneur THSA comporte une voie de charge primaire (PLP : « Primary Load Path ») et une voie de charge secondaire (SLP : « Secondary Load Path »). En fonctionnement normal, la charge passe à travers la voie primaire, tandis qu'en cas de rupture de la voie primaire, la charge passe à travers la voie secondaire. Dans ce cas, la voie secondaire réalise le lien mécanique entre les structures d'attache primaires de l'actionneur THSA, en remplacement de la voie primaire. Cependant, il est nécessaire que le pilote en soit informé, de même que l'équipe de maintenance au sol.

A cet effet, on connait des systèmes basés sur une détection du déplacement ou de l'écartement entre différentes pièces de l'actionneur. Toutefois, généralement ces systèmes manquent de fiabilité et sont complexes à intégrer à l'actionneur. Ainsi, en cas de dysfonctionnement de cette détection, il est possible que la rupture de la voie primaire ne soit signalée ni au pilote, ni ultérieurement à l'équipe de maintenance.

De ce fait, afin de détecter de manière fiable et précise la défaillance de la voie primaire, il est préférable de pouvoir détecter la charge exercée sur la voie secondaire lorsqu'elle est chargée. Par ailleurs, il est nécessaire que la charge détectée corresponde effectivement à la défaillance de la voie primaire, et ainsi éviter toute détection erronée due aux conditions extérieures ou au montage.

EP-A-1 972 549 concerne un actionneur de commande de vol présentant une voie primaire et une voie secondaire, laquelle est apte à reprendre l'effort de la voie primaire en cas de défaillance. La voie secondaire comprend une vis de fixation qui comporte des moyens de détection de mise sous charge de la voie secondaire, en particulier au moins un capteur muni de jauges extenso-métriques. Selon une forme de réalisation, chaque jauge coopère avec un élément complémentaire en saillie apte à mettre en contrainte la jauge au moins dans certaines configurations de la mise sous charge de la voie secondaire. Ainsi, les jauges de contrainte sont conçues pour être écrasées, radialement à la vis de fixation, par des éléments complémentaires en saillie, lesquels sont situés sur la chape de l'actionneur de commande de vol ou l'étrier d'attache. De ce fait, il est nécessaire de modifier l'actionneur, ce qui génère un temps d'intervention et un coût supplémentaires. De plus, la fiabilité et la précision du système sont limitées.

Le but de la présente invention est de fournir un système de commande d'organe de vol amélioré, prévu pour détecter de manière fiable et précise l'engagement de la voie secondaire de l'attache d'un actionneur de type THSA et fournir des informations correspondantes à l'ordinateur de commande de vol.

A cet effet, l'invention a pour objet un système de command d'organe de vol tel que défini par la revendication 1.

Ainsi, l'invention permet d'améliorer la fiabilité et la précision de la détection de la charge sur la voie secondaire, avec un système facile et rapide à mettre en oeuvre, en particulier sans modification ou démontage de l'organe de vol.

D'autres caractéristiques avantageuses de l'invention, prises isolément ou en combinaison, sont spécifiées aux revendications dépendantes 2 à 13.

L'invention a également pour objet un dispositif de commande de vol tel que défini à la revendication 14.

Enfin, l'invention a pour objet l'utilisation d'un système de commande d'organe de vol tel que mentionné ci-dessus, cette utilisation étant définie à la revendication 15.

Ainsi, le système selon l'invention peut être utilisé pour remplacer un système existant déjà installé sur un actionneur THSA, sans besoin de démonter intégralement cet actionneur THSA. Par ailleurs, si besoin, le système peut être utilisé seulement en partie, simplement pour remplacer une vis de fixation classique par la vis instrumentée. Ainsi, cette utilisation du système selon l'invention présente d'importants avantages en termes de maintenance, en réduisant la masse manutentionnée, le temps d'intervention, et donc le coût de l'opération de maintenance au sol.

L'invention sera mieux comprise à la lecture de la description qui va suivre, donnée uniquement à titre d'exemple et faite en référence aux dessins sur lesquels :
- la figure 1 est une vue en perspective d'un système de commande d'organe de vol conforme à l'invention ;
- les figures 2 et 3 sont des vues de côté du système, respectivement selon les flèches II et III de la figure 1 ;
- la figure 4 est une vue en perspective d'une voie secondaire de charge comprenant le système des figures 1 à 3 ;
- les figures 5 et 6 sont des vues de côté de la voie secondaire de la figure 4, respectivement selon les flèches V et VI ;
- la figure 7 est une coupe selon la ligne VII-VII de la figure 5 ;
- les figures 8 et 9 sont des coupes, respectivement selon les lignes VIII-VIII et IX-IX de la figure 6 ;
- la figure 10 est une vue en élévation d'une vis instrumentée équipant le système conforme à l'invention ;
- la figure 11 est une vue en élévation de la vis instrumentée, selon la flèche XI à la figure 10 ;
- la figure 12 est une vue en élévation, à plus petite échelle, selon la flèche XII à la figure 10 ;
- la figure 13 est une coupe selon la ligne XIII-XIII de la figure 10 ;
- la figure 14 est une vue à plus grande échelle du détail XIV de la figure 10 ;
- la figure 15 est une vue à plus grande échelle du détail XV de la figure 11 ;
- la figure 16 est une vue analogue à la figure 10, illustrant la vis instrumentée subissant une déformation de cisaillement ;
- la figure 17 est une vue en perspective d'un dispositif de type THSA avec une voie de charge secondaire comprenant le système conforme à l'invention ; et
- la figure 18 est une coupe partielle écorchée de la voie secondaire de la figure 17.

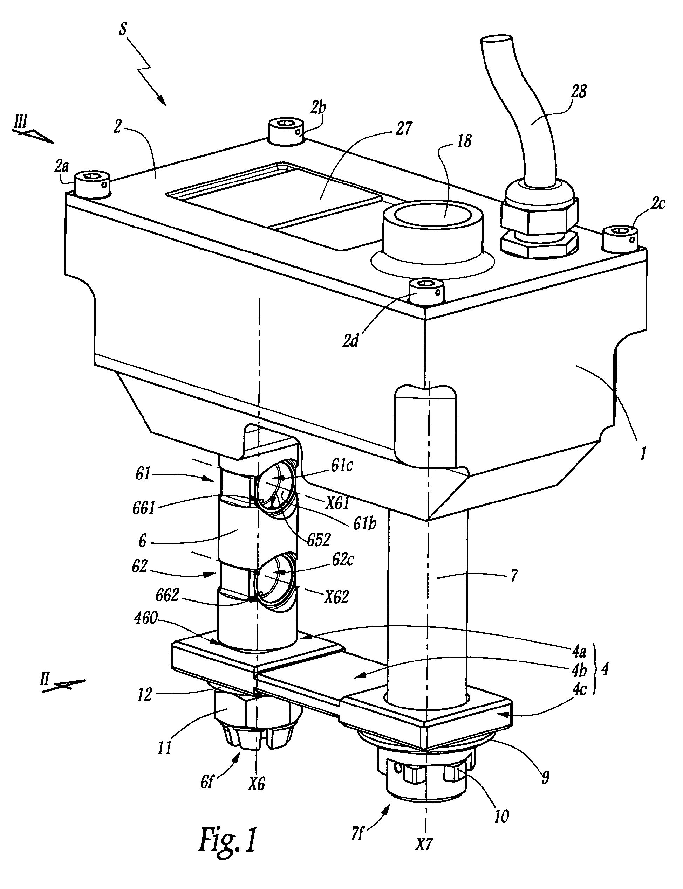

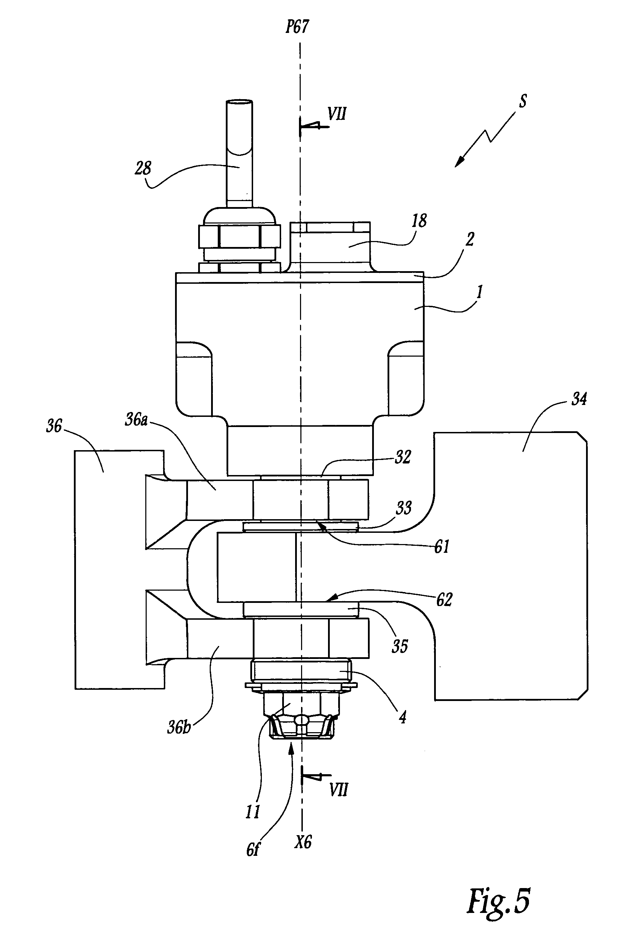

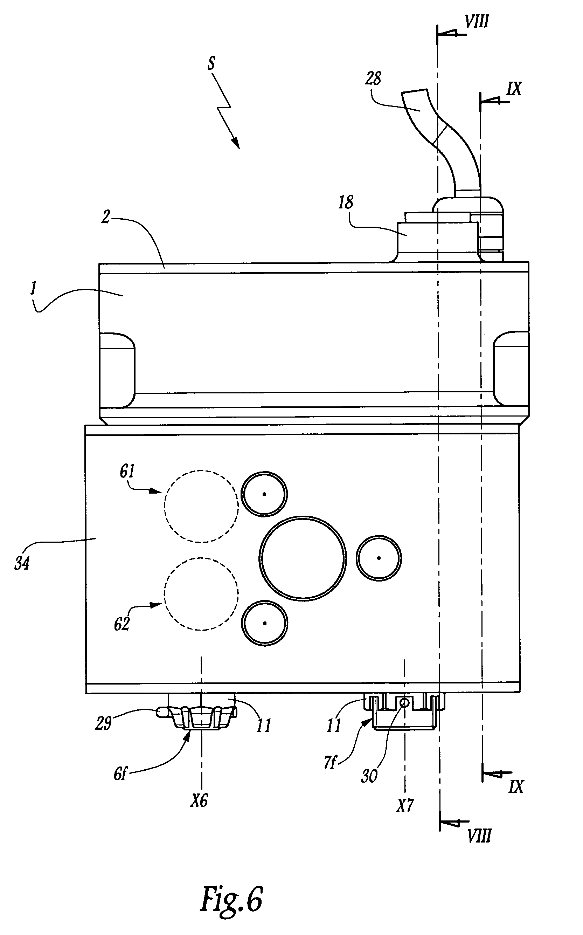

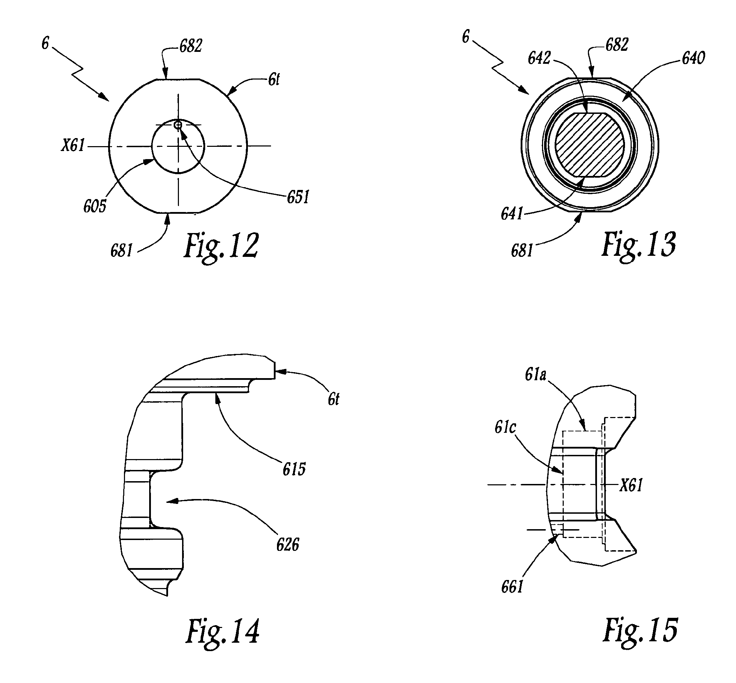

Sur les figures 1 à 18 est représenté un système S de commande d'organe de vol.

En pratique, le système S se présente sous la forme d'un kit LSK (« load sensing kit »), prêt à être installé sur la voie de charge secondaire SLP d'un organe de vol d'aéronef, en particulier sur un actionneur THSA. Un tel kit LSK est représenté seul, dans une configuration de montage, sur les figures 1 à 3.

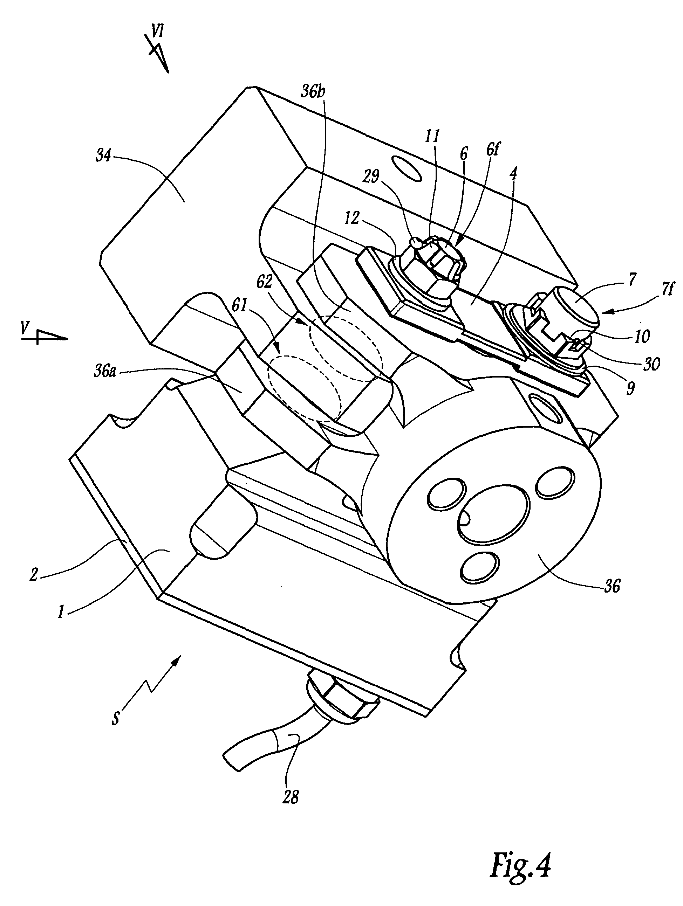

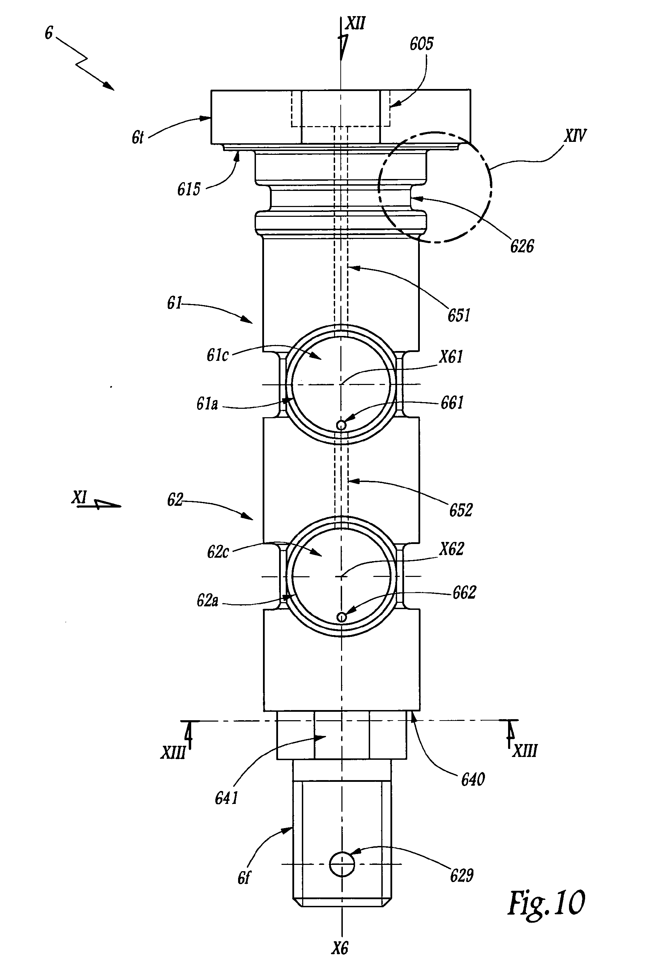

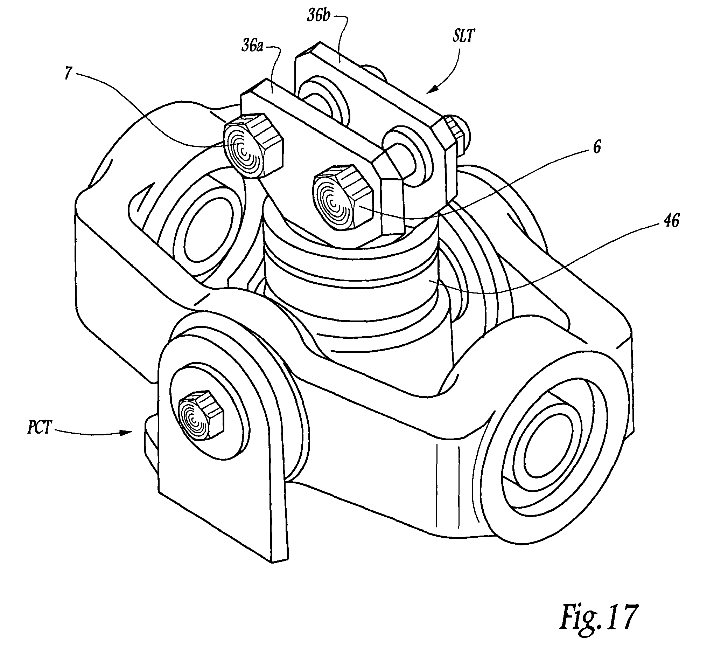

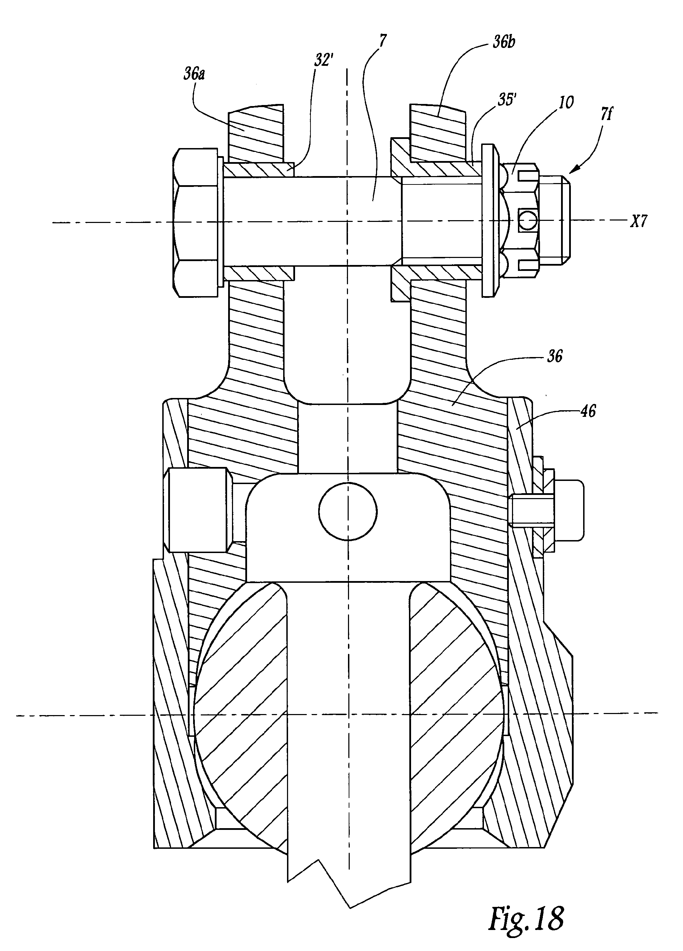

Par ailleurs, le système S est visible dans une configuration de fonctionnement, en situation avec les différents éléments de la voie de charge secondaire SLP, sur les figures 4 à 9, lesquelles permettent de distinguer certains détails qui sont autrement difficiles à apprécier, ainsi que sur les figures 17 et 18. En outre, les figures 10 à 16 représentent uniquement une vis de fixation instrumentée 6 équipant le système S, comme détaillé plus loin.

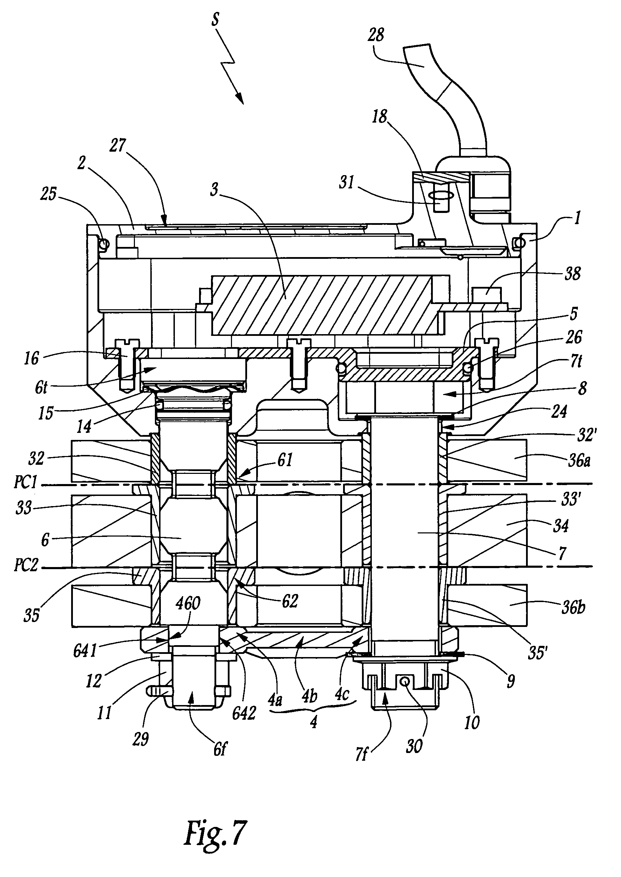

Le système S comprend un carter 1 muni d'un couvercle 2. Comme montré sur les figures 7 à 9, un joint d'étanchéité 25 est disposé dans le couvercle 2 et réalise l'étanchéité sur tout le pourtour intérieur du carter 1. Une carte électronique 3 est agencée dans le carter 1, maintenue par des vis 38, et reliée à un système électronique de l'aéronef par un câblage 28.

Une plaquette indicatrice 27 est disposée sur la surface extérieure du couvercle 2, comme visible sur la figure 1. Des informations et inscription peuvent figurer sur la plaquette 27, par exemple pour l'identification du constructeur et du produit. En alternative, la plaquette 27 peut présenter la forme d'un écran capable d'afficher des messages, notamment des informations qui lui sont communiquées par la carte électronique 3. Par ailleurs, il est envisageable de juxtaposer une plaquette d'identification et une plaquette d'affichage.

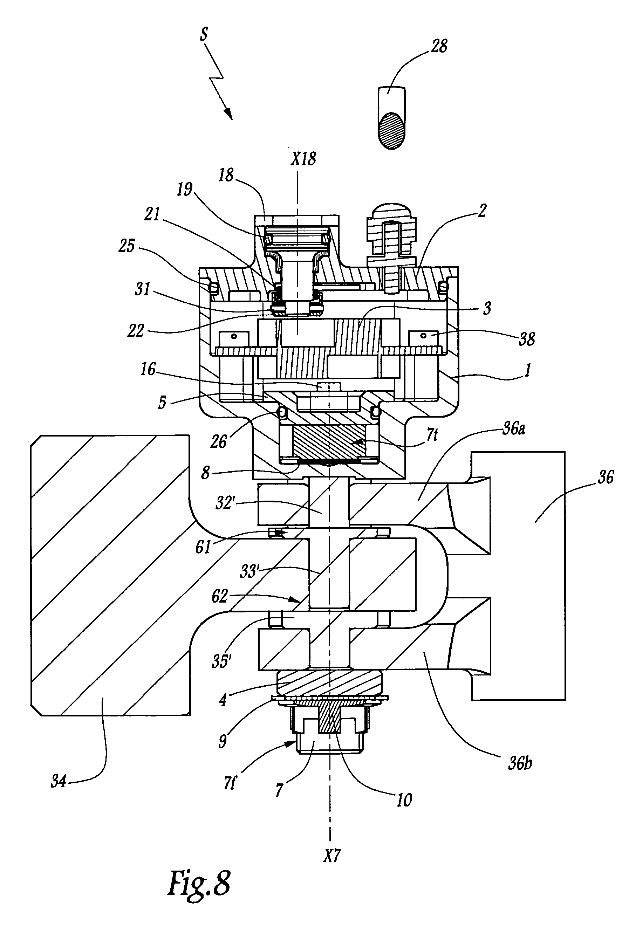

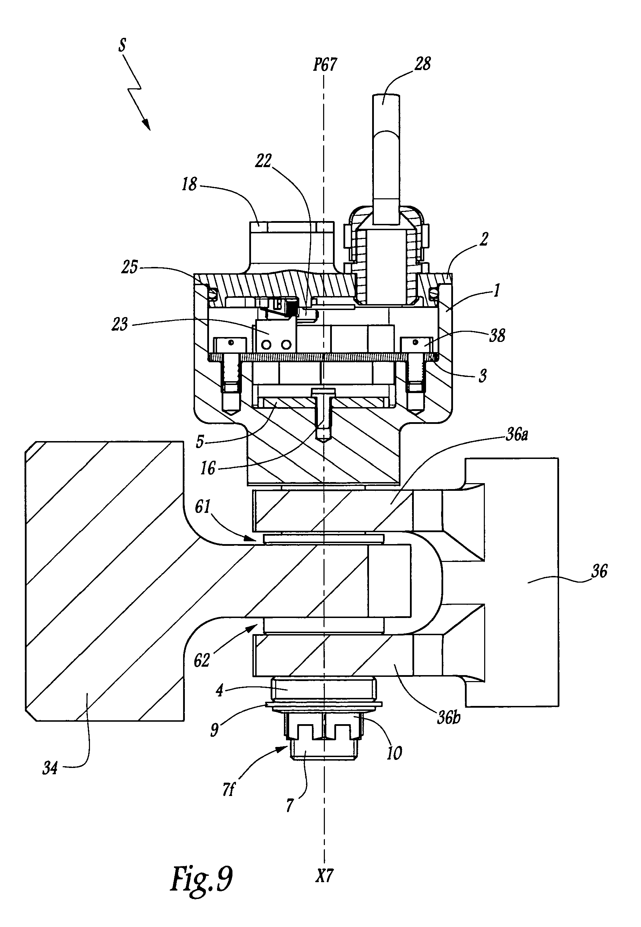

Un bouton 18 est agencé sur le couvercle 2, qui permet d'actionner un interrupteur 23 agencé dans le carter 1 par l'intermédiaire d'un ressort de torsion 21 et d'un actionneur 22, lequel coopère avec l'interrupteur 23, comme visible sur les figures 8 et 9. Lors de la mise en place du système S, afin de s'assurer de son fonctionnement, un opérateur peut le tester à l'aide du bouton 18. A cet effet, l'opérateur fait tourner le bouton 18 avec une clé, jusqu'à l'arrêt en butée. En cas de défaillance du système S, une notification peut par exemple être affichée sur la plaquette indicatrice 27. Dès que l'opérateur retire la clé, le bouton 18 revient en position initiale grâce au ressort de torsion 21. La raideur du ressort 21 est calculée de sorte à ne pas gêner l'action manuelle de l'opérateur. Un joint 19 est agencé dans le corps du bouton 18.

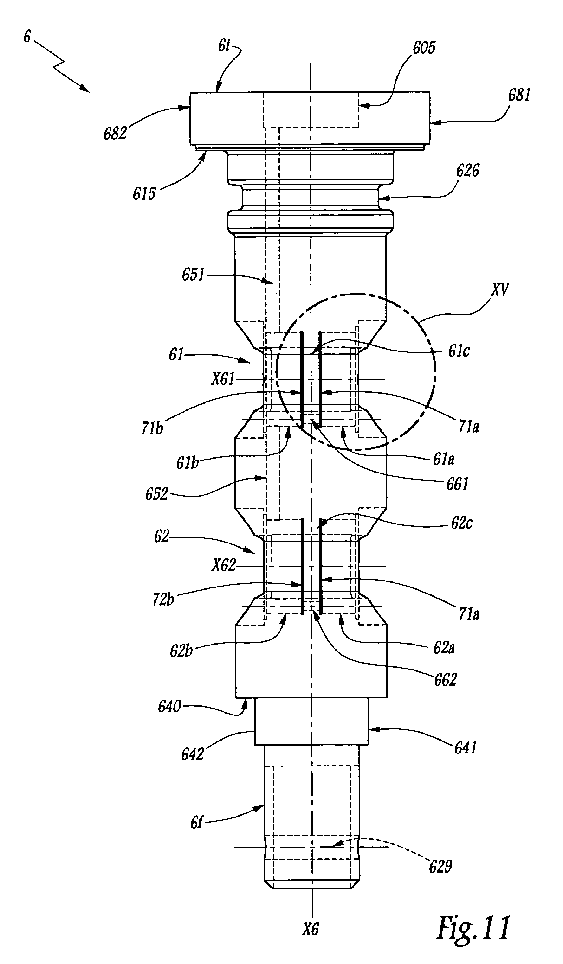

Le système S comprend également deux vis 6 et 7, qui sont prévues pour travailler en cisaillement et dont les têtes 6t et 7t sont agencées dans le carter 1. L'essentiel de la vis 6 s'étend hors du carter 1 selon un axe X6, jusqu'à une extrémité filetée 6f apte à recevoir une rondelle 12 et un écrou 11. L'essentiel de la vis 7 s'étend hors du carter 1 selon un axe X7, jusqu'à une extrémité filetée 7f apte à recevoir une rondelle 9 et un écrou 10. Plus précisément, la vis instrumentée 6 porte des jauges de contrainte 71 a, 71 b, 72a et 72b, comme montré à la figure 11, tandis que la vis 7 est une vis standard, non-instrumentée. La vis standard 7 est réalisée de préférence en matériau d'alliage acier, par exemple une nuance 4340.

Le système S comprend également une plaque de fixation 4 destinée au montage des vis 6 et 7. La plaque 4 est positionnée à l'extrémité des vis 6 et 7, à l'opposé du carter 1, c'est-à-dire du côté des extrémités filetées 6f et 7f, en s'étendant perpendiculairement aux axes X6 et X7. En particulier, comme visible sur les figures 1 et 7, la plaque 4 comprend une partie 4a correspondant à la vis 6, une partie 4c correspondant à la vis 7, et une partie 4b intermédiaire s'étendant entre les parties 4a et 4c. La partie 4a de la plaque 4 comporte un orifice 460 de passage de la vis 6, et la partie 4c comporte un orifice de passage de la vis 7.

Comme visible sur les figures 1 à 11, et la figure 16, la vis instrumentée 6 comprend deux zones de mesure 61 et 62 distinctes qui sont agencées le long de l'axe X6. La zone de mesure 61 comprend une cavité 61 a et une cavité 61 b qui sont séparées par une paroi amincie 61 c, chacune étant destinée à recevoir respectivement la jauge 71 a ou la jauge 71 b, placées dans le fond contre la paroi amincie 61 c. Les cavités 61 a et 61 b sont de forme cylindrique, ouvertes sur l'extérieur de la vis 6 et centrées sur un axe X61. De même, la zone de mesure 62 comprend une cavité 62a et une cavité 62b qui sont séparées par une paroi amincie 62c, chacune étant destinée à recevoir respectivement la jauge 72a ou la jauge 72b, placées dans le fond contre la paroi amincie 62c. Les cavités 62a et 62b sont de forme cylindrique, ouvertes sur l'extérieur de la vis 6 et centrées sur l'axe X62. Les parois amincies 61 c et 62c sont orientées parallèlement à l'axe X6 de la vis 6, et respectivement orientées perpendiculairement aux axes X61 et X62.

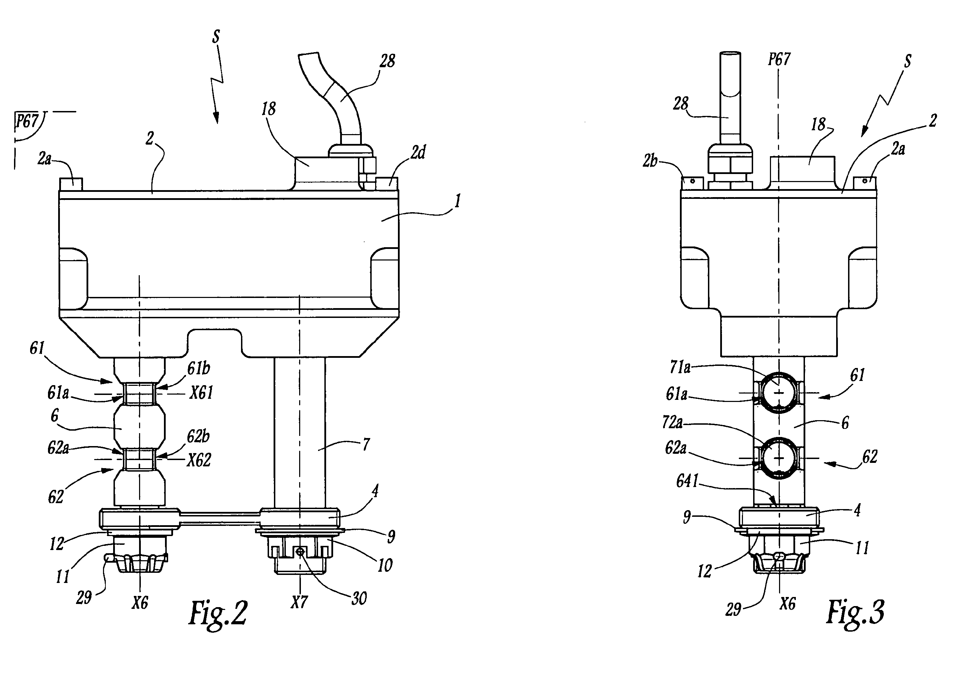

En pratique, comme visible sur les figures 3 et 11, les jauges de contrainte 71 a, 71 b, 72a et 72b sont positionnées par collage contre les surfaces respectives des parois amincies 61 c et 62c, qui de ce fait nécessitent un très bon état de surface. Chaque jauge 71 a, 71 b, 72a et 72b est protégée de l'eau et de la poussière par un couvercle métallique soudé, non représenté, le soudage étant de préférence réalisé par laser entre le couvercle et la cavité 61 a, 61 b, 62a ou 62b correspondante.

Ainsi, chaque jauge 71 a, 71 b, 72a et 72b est apte à mesurer une contrainte appliquée sur la vis 6, en particulier une contrainte de cisaillement appliquée sur la vis 6 dans une direction transverse à l'axe X6. A cet effet, les jauges 71 a, 71 b, 72a et 72b peuvent notamment détecter une déformation des parois amincies 61 c et 62c.

Une telle configuration offre une précision et une fiabilité de mesure importantes, ainsi qu'une bonne répétabilité. Egalement, les jauges 71 a, 71 b, 72a et 72b sont protégées dans les cavités 61 a, 61 b, 62a et 62b, ce qui ne serait pas le cas si elles étaient placées directement à la surface de la vis instrumentée 6.

En outre, chaque zone de mesure 61 ou 62 est instrumentée par un demi-pont de Wheatstone. Ainsi, la jonction entre les jauges 71 a et 71 b de la zone 61 et les jauges 72a et 72b de la zone 62 constitue un pont de Wheatstone complet. De préférence, le seuil de détection de chaque jauge 71 a, 71 b, 72a et 72b est égal à ± 1 000N. Dans le but de réaliser une détection optimale, la gamme de détection choisie pour chaque jauge 71 a, 71 b, 72a et 72b est égale à ± 4 000N.

De plus, chaque jauge 71 a, 71 b, 72a et 72b est munie de fils électriques, non représentés, par lesquels transitent les signaux de mesure. La remontée des fils est effectuée par des orifices 651, 652, 661 et 662 qui sont logés dans le corps de la vis 6, notamment représentés en pointillés sur les figures 10 et 11. Autrement dit, les orifices 651, 652, 661 et 662 permettent de relier les jauges de contrainte 71 a, 71 b, 72a et 72b, à la carte électronique 3 située dans le carter 1. L'orifice transverse 661 relie les cavités 61 a et 61 b ainsi que les jauges 71 a et 71 b de la zone de mesure 61, tandis que l'orifice transverse 662 relie les cavités 62a et 62b ainsi que les jauges 72a et 72b de la zone de mesure 62. L'orifice longitudinal 652 relie les orifices transverses 661 et 662, tandis que l'orifice longitudinal 651 relie l'orifice 661 à la tête de vis 6t, plus précisément l'orifice 651 débouche dans une cavité 605 qui est agencée dans la tête 6t.

Par ailleurs, comme visible sur les figures 10 à 15, la vis 6 est conçue de manière à faciliter son implantation dans le système S. Ainsi, la tête de vis 6t est munie d'un épaulement 615, en dessous duquel est agencée une gorge annulaire 626 destinée à recevoir un joint d'étanchéité 14, ainsi que de deux méplats anti-rotation 681 et 682 pour son positionnement dans le carter 1. Du côté de son extrémité fileté 6f, la vis instrumentée 6 comprend un alésage transverse 629 destiné à recevoir une goupille 29, ainsi qu'un épaulement 640 et deux méplats anti-rotation 641 et 642 pour son positionnement relativement à la partie 4a de la plaque de fixation 4.

En pratique, la vis instrumentée 6 permet de mesurer les contraintes de cisaillement qui lui sont appliquées lorsqu'elle est installée sur la voie de charge secondaire SLP, comme détaillé ci-après.

La voie de charge secondaire SLP comprend, comme visible sur les figures 4 à 9, une chape 36 en forme de U, dont les deux branches 36a et 36b viennent s'agencer de part et d'autre d'une branche d'étrier 34, laquelle appartient à la structure porteuse de l'aéronef. En particulier, la chape 36 est en acier, tandis que l'étrier 34 est en matériau aluminium. Les trois branches 34, 36a et 36b sont sensiblement parallélépipédiques, intercalées avec leur faces planes en regard l'une de l'autre, mais sans être en contact. Deux orifices traversants sont percés perpendiculairement aux trois branches, destinés à recevoir la vis instrumentée 6 et la vis standard 7. En fait, six alésages constituent les deux orifices de réception des vis 6 et 7.

Plus précisément, comme bien visible sur la figure 7, l'orifice de réception de la vis instrumentée 6 reçoit : une douille tubulaire 32 qui est agencée dans l'alésage correspondant de la branche 36a, une douille tubulaire 33 qui est munie d'un épaulement et agencée dans l'alésage correspondant de l'étrier 34, et une douille tubulaire 35 qui est munie d'un épaulement et agencée dans l'alésage correspondant de la branche 36b. Egalement, l'orifice de réception de la vis standard 7 reçoit : une douille tubulaire 32' qui est agencée dans l'alésage correspondant la branche 36a, une douille tubulaire 33' qui est munie d'un épaulement et agencée dans l'alésage correspondant de l'étrier 34, et une douille tubulaire 35' qui est munie d'un épaulement et agencée dans l'alésage correspondant de la branche 36b. Les différentes douilles 32, 33, 35, 32', 33' et 35' appartiennent à l'attache de la voie secondaire SLP, et non directement au système S et au kit LSK.

En pratique, la vis instrumentée 6 vient se loger dans l'orifice de réception correspondant, à l'intérieur de l'espace délimité par les douilles 32, 33 et 35. Egalement, la vis standard 7 vient se loger dans l'orifice de réception correspondant, à l'intérieur de l'espace délimité par les douilles 32', 33', et 35'. Toutefois, la vis 6 et la vis 7 sont interchangeables, sans que cela ne présente une gêne pour le fonctionnement du système S. Ainsi, le risque d'erreur pour l'opérateur est réduit.

Les têtes de vis 6t et 7t sont agencées dans le carter 1, lequel vient en appui contre les douilles 32 et 32'. De l'autre côté, la plaque de fixation 4 est agencée aux extrémités filetées 6f et 7f des vis 6 et 7. La plaque 4 vient en appui contre la branche 36b de la chape 36, au niveau des faces sensiblement planes des parties 4a et 4c. Puis les écrous 10 et 11 sont mis en place et serrés, comme détaillé plus loin. En particulier, la partie 4a de la plaque 4 vient en appui contre l'épaulement 640 de la vis 6. Egalement, la présence de la rondelle élastique 12 entre l'écrou 11 et la plaque 4 permet d'éviter l'apparition d'un jeu entre la plaque 4 et la branche 36b.

Plus précisément, comme visible sur la figure 7, les éléments en appui du côté de la vis instrumentée 6 sont les suivants : tête 6t, rondelle élastique 15, carter 1, douille 32, épaulement de la douille 33, étrier 34, épaulement de la douille 35, branche 36b de la chape 36 et épaulement 640, plaque de fixation 4, rondelle 12, écrou 11. Les appuis rigides sont comparables du côté de la vis standard 7, hormis l'épaulement 640.

Lors de la réalisation du système S, avant la livraison du kit LSK prêt à l'usage, les deux vis 6 et 7 sont intégrées dans le carter 1. Des moyens de pré-positionnement facilitent la mise en place des vis 6 et 7, ce qui permet un montage plus rapide du système S. A l'intérieur du carter 1, les têtes de vis 6t et 7t sont recouvertes par la plaque de verrouillage 5, laquelle est fixée par des vis 16. La plaque 5 permet de s'assurer du maintien en position des vis 6 et 7, notamment pour qu'elles ne puissent pas endommager la carte électronique 3 en cas de chute ou de choc du système S au montage. La plaque 5 est ouverte pour le passage des fils électriques en provenance de la vis instrumentée 6, lesquels sont reliés à la carte électronique 3.

Par ailleurs, le carter 1 participe également au maintien des têtes de vis 6t ou 7t, ainsi il n'est pas nécessaire que l'opérateur effectue lui-même ce maintien lors du serrage des écrous 10 et 11, ce qui constitue un gain de temps. Notamment, les méplats 681 et 682 de la tête de vis 6t assurent une fonction anti-rotation en étant positionnés dans un orifice complémentaire du carter 1, avec un léger jeu en rotation avant de venir en butée. De plus, l'agencement relatif des méplats 681 et 682 et du carter 1 permet d'assurer une orientation angulaire correcte de la vis instrumentée 6, en particulier des zones de mesure 61 et 62 et donc des jauges 71 a, 71 b, 72a et 72b, ce qui est essentiel pour son fonctionnement.

En outre, comme visible sur la figure 7, un trou oblong 24 est agencé dans le carter 1, pour le passage de la vis 7. De ce fait, l'entraxe entre les vis 6 et 7 peut présenter une certaine tolérance au montage, ce qui facilite leur positionnement dans la chape 36 et l'étrier 34. La tête 7t de la vis 7 repose sur une rondelle 8.

Ainsi, le carter 1 supporte les contraintes liées aux vibrations, à la pré-charge axiale et à l'opération de blocage des vis 6 et 7 en rotation. Concernant la vis standard 7, les vibrations sont limitées en raison du couple de serrage suffisant appliqué sur l'écrou 10. La pré-charge axiale et le blocage en rotation de la vis 7 résultent directement de ce couple de serrage.

Concernant la vis instrumentée 6, les vibrations, notamment dues à une partie de la masse du carter 1, de la carte électronique 3, du couvercle 2, du bouton 18, sont limitées en raison de la présence de la rondelle élastique 15 positionnée sous la tête de vis 6t. La pré-charge axiale de la vis 6 résulte également de la présence de cette rondelle élastique 15, et non pas du serrage de l'écrou 10. De plus, l'agencement relatif entre les méplats 641 et 642 et l'orifice 460 de la plaque 4 assure le blocage rigide en rotation de la vis instrumentée 6, aussi il n'est pas nécessaire que la tête de vis 6t soit rigidement bloquée en rotation dans le carter 1, au niveau des méplats 681 et 682, d'où le jeu.

Comme les contraintes exercées sur le carter 1 restent relativement faibles, il est possible de réaliser le carter 1 en alliage d'aluminium, notamment une nuance d'alliage d'aluminium 2024. La présence des joints 14, 25 et 26 empêche la pénétration d'eau ou d'huile dans le carter 1, ainsi l'étanchéité du carter 1 est assurée et la carte électronique 3 est protégée.

En outre, la rondelle élastique 15 permet le maintien en position des éléments entre eux sans déformation, et la réduction des vibrations dans le carter 1. La rondelle 15 est également destinée à maintenir le contact entre le carter 1 et la douille 32, par exemple lorsque l'aéronef subit des accélérations, et ainsi réduire les chocs et l'usure de contact. Par ailleurs, un traitement localisé de dureté peut être effectué sur le carter 1 dans la zone de contact avec la douille 32.

En fonctionnement, le maintien en position du système S est plus particulièrement assuré, d'une part, par l'écrou 10 de la vis 7 et, d'autre part, par la rondelle élastique 15 de la vis 6.

Ainsi, lorsque le système S est installé, et notamment les vis 6 et 7 sont en place, la chape 36 est rigidement liée à l'étrier 34, et la voie de charge secondaire SLP est reliée à la structure de l'aéronef. De ce fait, la voie secondaire de l'attache de l'actionneur THSA est engagée.

En pratique, durant le fonctionnement de l'aéronef, l'étrier 34 et la chape 36 sont amenés à subir des efforts les incitant à se déplacer relativement l'un par rapport à l'autre. Dans ce cas, des contraintes de cisaillement sont transmises aux vis 6 et 7 par l'intermédiaire des douilles 32, 33, 35, 32', 33' et 35', au niveau des interfaces sensiblement planes entre la chape 36 et l'étrier 34 qui constituent alors des sections de cisaillement.

Autrement dit, comme visible sur la figure 7, la première interface plane correspond à la zone de mesure 61 de la vis instrumentée 6 : elle est située au niveau de l'espace compris entre la branche 36a et l'étrier 34, entre la douille 32 et la douille 33, sensiblement dans un plan de cisaillement PC1 perpendiculaire à l'axe X6. Pour sa part, la deuxième interface plane correspond à la zone de mesure 62 de la vis instrumentée 6 : elle est située au niveau de l'espace compris entre l'étrier 34 et la branche 36b, entre la douille 33 et la douille 35, sensiblement dans un plan PC2 perpendiculaire à l'axe X6. De ce fait, à chaque plan de cisaillement PC1 ou PC2 correspond deux jauges, respectivement 71a et 71 b, ou bien 72a et 72b. Les parois amincies 61 c et 62c sont orientées perpendiculairement aux plans de cisaillement PC1 et PC2, eux même situés au niveau de deux interfaces planes entre la structure porteuse d'aéronef 34 et la voie de charge 36.

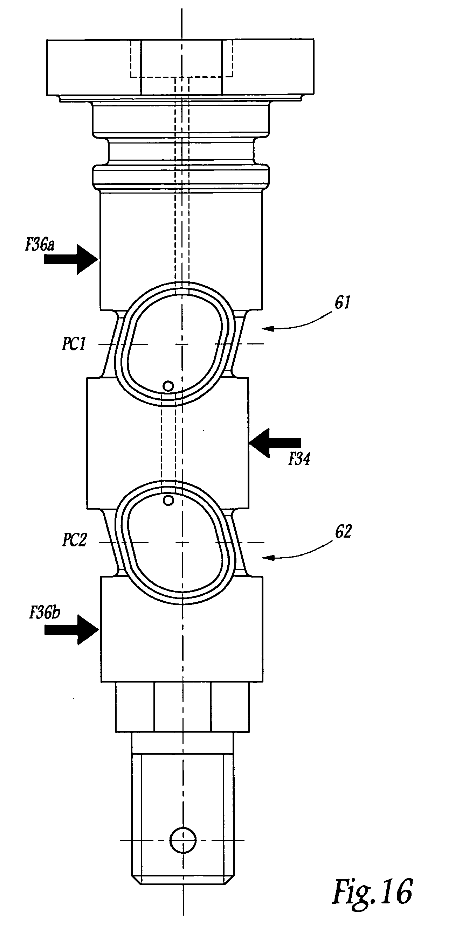

De préférence, la vis instrumentée 6 est fabriquée en acier inoxydable à haute limite élastique. La vis 6 présente d'importantes propriétés de résistance mécanique, dans le but de supporter des contraintes de cisaillement allant jusqu'à 20 000 N sans subir de déformation permanente. Une telle déformation est visible sur la figure 16 : lorsque les branches 34, 36a et 36b subissent un déplacement relatif, elles exercent des forces opposées sur la vis 6, représentées respectivement par les flèches F34, F36a et F36b sur la figure 16. De ce fait, lorsque le niveau de contrainte admissible exercé sur la vis 6 est dépassé, celle-ci est susceptible de subir une déformation, dommageable pour les jauges 71 a, 71 b, 72a et 72b, dans les plans de cisaillement PC1 et PC2.

De manière avantageuse, le système S peut être installé sur un nouvel avion ou en remplacement d'un système existant. Lors d'une telle opération, il est plus simple et plus rapide de changer seulement les deux vis de l'attache de voie secondaire que les autres éléments mécaniques. Dans ce cas, le système S peut être installé sur la voie secondaire sans qu'il ne soit nécessaire de modifier l'attache de l'actionneur de commande de vol. Les vis déjà en place, correspondant aux vis 6 et 7, sont retirées, puis le système S est positionné et testé afin de s'assurer de son fonctionnement correct. Les ajustements entre les douilles de guidage 32, 33 et 35 et la vis instrumentée 6 sont inchangés en comparaison avec les ajustements d'origine entre les douilles 32, 33 et 35 et une vis non-instrumentée pré-existante.

La procédure d'installation ou de maintenance du système S est détaillée ci-après.

En pratique, l'opérateur suit une procédure d'installation ou de maintenance préétablie. Tout d'abord, les deux vis pré-existantes sont retirées. Ensuite, avec à sa disposition le kit LSK, l'opérateur installe le système S sur l'attache de la voie secondaire SLP de l'actionneur THSA. Premièrement, l'opérateur positionne l'ensemble comprenant le carter 1 et les vis 6 et 7, en accordant une attention toute particulière à l'insertion des vis 6 et 7 dans les alésages des douilles 32, 33, 35, 32', 33' et 35'. Puis l'opérateur positionne la plaque de fixation 4 à l'extrémité des vis 6 et 7, contre la branche 36a de la chape 36, en accordant une attention toute particulière au positionnement relatif des méplats 641 et 642 de la vis instrumentée 6 coopérant avec l'orifice complémentaire 460 de la plaque 4. De préférence, une seule position relative est autorisée, ce qui facilite le travail de l'opérateur. Enfin, l'opérateur positionne les rondelles 9 et 12, serre les écrous 10 et 11 et positionne les goupilles de sécurité 29 et 30.

Lors du serrage des écrous 10 et 11 contre la plaque 4, des efforts sont transmis aux vis 6 et 7 depuis leurs parties filetées 6f et 7f. De ce fait, il est nécessaire de s'assurer que ces efforts ne perturbent pas le positionnement et la mesure des jauges 71 a, 71 b, 72a et 72b disposées dans la vis instrumentée. Plus particulièrement, les jauges 71 a, 71 b, 72a et 72b ne doivent pas être perturbées par des contraintes de tension ou torsion engendrées par le serrage de l'écrou 11, avant leur mise en fonctionnement sur la voie secondaire SLP.

Toutefois, il est nécessaire de serrer l'écrou 11 sur l'extrémité filetée 6f de la vis instrumentée 6, notamment afin de limiter le risque vibratoire, mais sans exercer de contrainte excessive sur la vis 6. En pratique, lors du serrage de l'écrou 11, la partie 4a de la plaque 4 vient en butée contre l'épaulement 640 de la vis 6, ce qui permet de localiser les contraintes de tension dans la vis 6 entre l'épaulement 640 et l'écrou 11, en dehors de la zone de mesure. La présence de la rondelle 12 permet à d'éviter l'apparition d'un jeu entre la partie 4a de la plaque 4 et la branche 36a. D'autre part, les méplats anti-rotation 641 et 642 situés sur la vis 6 permettent de localiser les contraintes de torsion dans leur voisinage proche, toujours entre l'épaulement 640 et l'écrou 11, en dehors de la zone de mesure. Par ailleurs, les méplats 641 et 642 communiquent les efforts de serrage à la plaque 4, qui communique ces efforts à la vis standard 7, laquelle encaisse donc l'essentiel des efforts de serrage.

Grâce à la présence de la plaque de fixation 4, le maintien du système S est assuré, sans nécessité d'étalonnage et de réglage longs et fastidieux, avec une électronique plus complexe. Ce dispositif incluant la plaque 4 permet de s'affranchir des contraintes de montage dues au serrage des écrous 10 et 11.

De manière avantageuse, les écrous 10 et 11 sont différents : l'extrémité filetée 7f et l'écrou 11 de la vis standard 7 sont filetés sur la base du système poussique, tandis que l'extrémité filetée 6f et l'écrou 10 de la vis instrumentée 6 sont filetés sur la base du système métrique. Ainsi les pas de filetage sont différents, mais les couples de serrage sont identiques. Dans ce cas, deux embouts de clé sont nécessaires, mais cela restent des clés standard. En outre, cela aide l'opérateur à ne pas confondre les deux vis.

Toutefois, pour éviter les erreurs durant l'installation, il est préférable que la vis instrumentée 6 et la vis standard 7 soient serrées avec le même couple de serrage. A titre indicatif, le couple de serrage peut être par exemple compris entre 1,95 et 2,2 daN.m.

Sur les figures 17 et 18 est représenté un dispositif de commande de vol pour l'actionneur THSA, comprenant une voie de charge primaire PLP apte à encaisser la charge exercée en fonctionnement normal sur l'attache de l'actionneur THSA, et une voie de charge secondaire SLP apte à encaisser ladite charge en cas de défaillance de la voie primaire PLP. On retrouve la chape 36 munie des deux branches 36a et 36b, dans lesquelles sont agencées les vis 6 et 7. La chape 36 est reçue dans une pièce cylindrique 46 de la voie de charge secondaire SLP. Un embout rotulé est agencé à l'intérieur des pièces 36 et 46, pour la fixation du dispositif et en particulier la translation d'effort dans l'actionneur THSA. L'étrier 34 n'est pas représenté sur ces figures.

En alternative non représentée, la vis 6 peut présenter seulement une zone de mesure 61 ou 62. Toutefois, dans ce cas, la configuration du pont de Wheatstone doit être adaptée en conséquence.

Selon une autre alternative non représentée, chaque zone de mesure 61 ou 62 peut comprendre seulement une jauge de contrainte 71 a, 71 b, 72a ou 72b. Dans ce cas également, la configuration du pont de Wheatstone doit être adaptée en conséquence.

Selon une autre alternative non représentée, chaque zone de mesure 61 ou 62 peut présenter un agencement différent, en particulier les cavités 61 a, 61 b, 62a, 62b et les parois minces 61 c, 62c peuvent présenter des formes ou des positionnements différents. En particulier, les cavités 62a et 62b peuvent ne pas être ouvertes sur l'extérieur de la vis 6, mais comprises dans le corps de la vis 6, réalisées par exemple à l'aide d'un perçage axial.

Selon une autre alternative non représentée, la vis instrumentée 6 présente seulement un méplat 641 ou 642, et l'orifice 460 de la plaque 4 est configuré en conséquence.

Selon une autre alternative non représentée, les deux vis 6 et 7 sont instrumentées.

## Revendications

1. Système (S) de commande d'organe de vol, comprenant au moins une vis instrumentée de fixation (6) reliant une structure porteuse d'aéronef (34) et une voie de charge (36), la vis instrumentée présentant au moins une zone de mesure (61 ; 62) pour détecter la mise sous charge de la voie de charge, le système comprenant des moyens de fixation (4, 11) aptes à bloquer la vis instrumentée (6) en position par rapport à la structure porteuse d'aéronef (34) et à la voie de charge (36), sans contraindre la vis instrumentée (6) au niveau de la ou les zones de mesure (61 ; 62), ni en tension, ni en torsion, **caractérisé en ce que** la ou chaque zone de mesure (61 ; 62) de la vis instrumentée (6) comprend :
- deux cavités (61 a, 61 b ; 62a, 62b) qui sont opposées par rapport à son axe (X6) et séparées l'une de l'autre suivant un axe transverse (X61 ; X62) par une paroi amincie (61 c ; 62c) apte à être déformée sous l'action d'une contrainte de cisaillement appliquée à la vis (6), et
- au moins une jauge de contrainte (71 a, 71 b ; 72a, 72b) qui est agencée dans le fond d'une cavité (61 a, 61 b ; 62a, 62b), contre la paroi amincie (61 c ; 62c), chaque jauge de contrainte étant apte à détecter une déformation de la paroi amincie,
et **en ce que** lesdits moyens de fixation (4, 11) comprennent :
- une plaque de fixation (4) qui est positionnée à une extrémité filetée (6f) de la vis instrumentée (6), en appui contre la structure porteuse d'aéronef (34) ou la voie de charge (36), et qui s'étend perpendiculairement à l'axe (X6) de la vis (6), et
- un écrou (11) qui est disposé à l'extrémité filetée (6f) de la vis instrumentée (6) et qui est apte à immobiliser la vis instrumentée (6) par rapport à la structure porteuse d'aéronef (34) ou la voie de charge (36) contre laquelle la plaque de fixation (4) est appuyée.

2. Système (S) de commande d'organe de vol selon la revendication 1, **caractérisé en ce que** la ou chaque zone de mesure (61 ; 62) comprend deux jauges de contrainte (71 a, 71 b ; 72a, 72b) qui sont chacune agencées d'un côté de la paroi amincie (61 c ; 62c), laquelle forme un plan orthogonal à un plan de cisaillement (PC1 ; PC2) pour la vis instrumentée (6).

3. Système (S) de commande d'organe de vol selon l'une des revendications précédentes, **caractérisé en ce qu'**il comprend deux zones de mesure (61 ; 62) localisées dans des plans de cisaillement (PC1 ; PC2) pour la vis (6), qui se succèdent le long de la vis instrumentée (6) et qui sont respectivement situés au niveau de deux interfaces planes entre la structure porteuse d'aéronef (34) et la voie de charge (36).

4. Système de commande d'organe de vol selon l'une des revendications précédentes, **caractérisé en ce que** la vis instrumentée (6) présente au moins un méplat (641, 642), qui est agencé entre l'extrémité filetée (6f) et la zone de mesure (62) la plus proche de cette extrémité filetée (6f), la partie de vis (6) présentant l'au moins un méplat (641, 642) étant apte à venir se loger dans un orifice complémentaire (460) de la plaque de fixation (4), de manière que la vis instrumentée (6) soit bloquée en rotation par rapport aux moyens de fixation (4, 11), et que les contraintes de tension exercées sur la vis instrumentée (6) par le serrage de l'écrou (11) soient localisées sensiblement entre l'épaulement (640) et l'écrou (11), hors de la ou des zones de mesure (61 ; 62).

5. Système de commande d'organe de vol selon l'une des revendications précédentes, **caractérisé en ce que** la vis instrumentée (6) présente un épaulement transverse (640), qui est agencé entre l'extrémité filetée (6f) et la zone de mesure (62) la plus proche de cette extrémité filetée (6f), l'épaulement (640) étant apte à venir en appui contre la plaque de fixation (4), de manière que la vis instrumentée (6) soit bloquée en translation par rapport aux moyens de fixation (4, 11), et que les contraintes de tension sur la vis instrumentée (6) engendrées par le serrage de l'écrou (11) soient localisées sensiblement entre l'épaulement (640) et l'écrou (11), hors de la ou des zones de mesure (61 ; 62).

6. Système de commande d'organe de vol selon l'une des revendications précédentes, **caractérisé en ce qu'**il comprend également une deuxième vis instrumentée qui s'étend selon un axe parallèle à l'axe (X6) de la première vis instrumentée (6) et qui relie la structure porteuse d'aéronef (34) et la voie de charge (36).

7. Système de commande d'organe de vol selon l'une des revendications 1 à 5, **caractérisé en ce qu'**il comprend également :
- une vis non instrumentée (7) qui s'étend selon un axe (X7) parallèle à l'axe (X6) de la première vis instrumentée (6) et qui relie la structure porteuse d'aéronef (34) et la voie de charge (36), et
- un écrou (10) qui est disposé à une extrémité filetée (7f) de la vis non instrumentée (7), qui est apte à serrer la plaque de fixation (4) contre la structure porteuse d'aéronef (34) ou la voie de charge (36) contre laquelle la plaque de fixation (4) est appuyée, et qui est adapté pour supporter l'essentiel des contraintes de serrage de la plaque (4).

8. Système de commande d'organe de vol selon la revendication 7, **caractérisé en ce que** l'écrou (11) de la vis instrumentée (6) et l'écrou (10) de la vis non instrumentée (7) présentent des pas de vis différents, mais sont aptes à être verrouillés sous l'action d'un couple de serrage sensiblement identique.

9. Système de commande d'organe de vol selon l'une des revendications précédentes, **caractérisé en ce qu'**il comprend également un carter (1) dans lequel est agencé de manière sensiblement étanche une carte électronique (3) reliée à la ou aux jauges de contraintes (71 a, 71 b, 72a, 72b) et hors duquel s'étend l'essentiel de la vis instrumentée (6), et le cas échéant l'essentiel de la vis non instrumentée (7).

10. Système de commande d'organe de vol selon la revendication 9, **caractérisé en ce que** l'intérieur de la vis instrumentée (6) inclut une pluralité d'orifices de passage (651, 652, 661, 662), dans lesquels sont agencés des fils de connexion reliant la ou les jauges de contrainte (71 a, 71 b ; 72a, 72b) et la carte électronique (3) située dans le carter (1 ), avec :
- un orifice longitudinal (651, 652) qui s'étend parallèlement au premier axe (X6), le cas échéant en reliant les zones de mesure (61 ; 62) entre elles, et
- dans chaque zone de mesure (61 ; 62), un orifice transversal (661 ; 662) qui relie les jauges de contrainte (71 a, 71 b ; 72a, 72b) situées dans les cavités correspondantes (61 a, 61 b ; 62a, 62b) à l'orifice longitudinal (651, 652).

11. Système de commande d'organe de vol selon l'une des revendications 9 ou 10, **caractérisé en ce que** le carter (1) présente un bouton rotatif (18) en saillie, le bouton étant apte être manipulé par un opérateur de manière à tester le fonctionnement du système (S).

12. Système de commande d'organe de vol selon la revendication 11, **caractérisé en ce que** le carter (1) présente des moyens d'affichage (27), par exemple une plaquette indicatrice, qui sont aptes à afficher le résultat du test effectué à l'aide du bouton (18).

13. Système de commande d'organe de vol selon l'une des revendications 9 à 12, **caractérisé en ce qu'**il comprend également une rondelle élastique (15) qui est positionnée dans le carter (1), entre la tête (6t) de la vis instrumentée (6) et le carter (1), et qui est apte, d'une part, à amortir les vibrations dans le carter (1) et, d'autre part, à maintenir axialement la vis instrumentée (6).

14. Dispositif de commande de vol, notamment pour un actionneur de type THSA, comprenant :
- une voie de charge primaire (PLP) apte à encaisser la charge exercée en fonctionnement normal sur une attache d'un actionneur de commande de vol, et
- une voie de charge secondaire (SLP) apte à encaisser ladite charge en cas de défaillance de la voie primaire,
le dispositif étant **caractérisé en ce que** la voie de charge secondaire (SLP) comprend un système de commande d'organe de vol selon l'une des revendications précédentes.

15. Utilisation d'un système (S) de commande d'organe de vol selon l'une des revendications 1 à 13, pour le remplacement d'un système pré-existant qui équipe une voie de charge secondaire (SLP) agencée sur une attache d'un actionneur de commande de vol, notamment pour remplacer une vis de fixation pré-existante reliant une structure porteuse d'aéronef (34) et la voie de charge secondaire (SLP) par la vis de fixation instrumentée (6), sans modification de l'attache de l'actionneur de commande de vol.

## Claims

1. Flight unit control system (S) comprising at least one instrumented fastening bolt (6) connecting an aircraft carrier structure (34) and a load path (36), the instrumented bolt having at least one measurement area (61; 62) for detecting that the load path is under load, the system comprising fastening means (4, 11) capable of locking the instrumented bolt (6) in position relative to the aircraft carrier structure (34) and to the load path (36), without stressing the instrumented bolt (6) in the measurement area or areas (61; 62), neither in tension nor in torsion, **characterized in that** the or each measurement area (61; 62) of the instrumented bolt (6) comprises:
- two cavities (61 a, 61 b; 62a, 62b) which are opposite each other in relation to its axis (X6) and separated from each other along a transverse axis (X61; X62) by a thinned wall (61c; 62c) capable of being deformed under the action of a shear stress applied to the bolt (6); and
- at least one strain gauge (71 a, 71 b; 72a, 72b) which is placed in the bottom of a cavity (61 a, 61 b; 62a, 62b) against the thinned wall (61c; 62c), each strain gauge being capable of detecting a deformation of the thinned wall,
and **in that** said fastening means (4, 11) comprise:
- a fastening plate (4) which is positioned at a threaded end (6f) of the instrumented bolt (6), bearing against the aircraft carrier structure (34) or the load path (38), and which extends perpendicularly to the axis (X6) of the bolt (6); and
- a nut (11) which is placed on the threaded end (6f) of the instrumented bolt (6) and is capable of immobilizing the instrumented bolt (6) relative to the aircraft carrier structure (34) or the load path (36) against which the fastening plate (4) bears.

2. Flight unit control system (S) according to claim 1, **characterized in that** the or each measurement area (61; 62) comprises two strain gauges (71 a, 71 b; 72a, 72b) each placed on one side of the thinned wall (61c; 62c) that forms a plane orthogonal to a shear plane (PC1; PC2) for the instrumented bolt (6).

3. Flight unit control system (S) according to one of the preceding claims, **characterized in that** it comprises two measurement areas (61; 62) located in shear planes (PC1; PC2) for the bolt (6), which areas follow one after the other along the instrumented bolt (6) and are located at the two plane interfaces respectively between the aircraft carrier structure (34) and the load path (36).

4. Flight unit control system according to one of the preceding claims, **characterized in that** the instrumented bolt (6) has at least one flat (641, 642) which is placed between the threaded end (6f) and the measurement area (62) closest to this threaded end (6f), that portion of the bolt (6) having the at least one flat (641, 642) being able to be housed in a complementary orifice (460) of the fastening plate (4) so that the instrumented bolt (6) is locked so as to be unable to rotate relative to the fastening means (4, 11), and **in that** the tensile forces exerted on the instrumented bolt (6) by tightening the nut (11) are localized substantially between the shoulder (640) and the nut (11), away from the measurement area or areas (61; 62).

5. Flight unit control system according to one of the preceding claims, **characterized in that** the instrumented bolt (6) has a transverse shoulder (640) which is placed between the threaded end (6f) and the measurement area (62) closest to this threaded end (6f), the shoulder (640) being capable of bearing against the fastening plate (4) so that the instrumented bolt (6) is locked, preventing it from moving translationally with respect to the fastening means (4, 11), and **in that** the tensile stresses on the instrumented bolt (6) generated by tightening the nut (11) are localized substantially between the shoulder (640) and the nut (11), away from the measurement area or areas (61; 62).

6. Flight unit control system according to one of the preceding claims, **characterized in that** it also includes a second instrumented bolt that extends along an axis parallel to the axis (X6) of the first instrumented bolt (6) and connects the aircraft carrier structure (34) and the load path (36).

7. Flight unit control system according to one of claims 1 to 5, **characterized in that** it also comprises:
- a non-instrumented bolt (7) that extends along an axis (X7) parallel to the axis (X6) of the first instrumented bolt (6) and connects the aircraft carrier structure (34) and the load path (36); and
- a nut (10) which is placed at a threaded end (7f) of the non-instrumented bolt (7) and is capable of clamping the fastening plate (4) against the aircraft carrier structure (34) or the load path (36) against which the fastening plate (4) bears and which is designed to withstand essentially all of the clamping stresses of the plate (4).

8. Flight unit control system according to claim 7, **characterized in that** the nut (11) of the instrumented bolt (6) and the nut (10) of the non-instrumented bolt (7) have different screw pitches, but are capable of being locked under the action of a substantially identical tightening torque.

9. Flight unit control system according to one of the preceding claims, **characterized in that** it also includes a casing (1) in which an electronic card (3) is placed in a substantially sealed manner, said card being connected to the strain gauge or gauges (71 a, 71b, 72a, 72b), and away from which most of the instrumented bolt (6) and, where appropriate, most of the non-instrumented bolt (7) extend.

10. Flight unit control system according to claim 9, **characterized in that** the interior of the instrumented bolt (6) includes a plurality of through-orifices (651, 652, 661, 662) in which connection wires are placed that connect the strain gauge or gauges (71 a, 71 b; 72a, 72b) and the electronic card (3) located in the casing (1), with:
- a longitudinal orifice (651, 652) that extends parallel to the first axis (X6), where appropriate connecting the measurement areas (61; 62) together; and
- in each measurement area (61; 62), a through-orifice (661; 662) that connects the strain gauges (71 a, 71b; 72a, 72b) located in the corresponding cavities (61 a, 61 b; 62a, 62b) at the longitudinal orifice (651, 652).

11. Flight unit control system according to one of claims 9 or 10, **characterized in that** the casing (1) has a projecting rotary knob (18), the knob being able to be manipulated by an operator so as to test the operation of the system (S).

12. Flight unit control system according to claim 11, **characterized in that** the casing (1) has display means (27), for example an indicating plate, which are capable of displaying the results of the test carried out by means of the knob (18).

13. Flight unit control system according to one of claims 9 to 12, **characterized in that** it also includes a spring washer (15) which is positioned in the casing (1), between the head (6t) of the instrumented bolt (6) and the casing (1), and which is capable, on the one hand, of damping the vibrations in the casing (1) and, on the other hand, of keeping the instrumented bolt (6) axially in place.

14. Flight control device, especially for an actuator of the THSA type, comprising:
- a primary load path (PLP) capable of accommodating the load exerted in normal operation on an attachment of a flight control actuator; and
- a secondary load path (SLP) capable of accommodating said load in the event of the primary path failing,
the device being **characterized in that** the secondary load path (SLP) comprises a flight unit control system according to one of the preceding claims.

15. Use of a flight unit control system (S) according to one of claims 1 to 13, for replacing a pre-existing system with which a secondary load path (SLP), based on an attachment of a flight control actuator, is equipped, in particular to replace a pre-existing fastening bolt connecting an aircraft carrier structure (34) and the secondary load path (SLP) with the instrumented fastening bolt (6), without modifying the attachment of the flight control actuator.

## Patentansprüche

1. System (S) zur Steuerung eines Flugorgans, das mindestens eine instrumentierte Befestigungsschraube (6) umfasst, die eine Trägerstruktur (34) des Luftfahrzeugs und einen Lastpfad (36) verbindet, wobei die instrumentierte Schraube mindestens eine Messzone (61; 62) zum Detektieren des Unter-Last-Setzens des Lastpfades aufweist, wobei das System Mittel (4,11) zur Befestigung umfasst, die geeignet sind, die instrumentierte Schraube in Position in Bezug auf die Trägerstruktur (34) des Luftfahrzeugs und den Lastpfad (36) zu blockierten, ohne die instrumentierte Schraube (6) an der oder den Messzonen (61; 62), weder hinsichtlich Spannung noch hinsichtlich Torsion, zu beanspruchen, **dadurch gekennzeichnet, dass** die oder jede Messzone (61; 62) der instrumentierten Schraube (6) umfasst:
- zwei Kavitäten (61a, 61b; 62a, 62b), die sich in Bezug auf ihre Achse (X6) gegenüberliegen und voneinander gemäß einer Querachse (X61; X62) durch eine verdünnte Wand (61c; 62c) getrennt sind, die geeignet ist, unter der Wirkung einer Scherspannung, die auf die Schraube (6) aufgebracht wird, sich zu verformen, und
- mindestens einen Dehnungsmessstreifen (71a, 71b; 72a, 72b), der am Boden der Kavität (61a, 61b; 62a, 62b) an der verdünnten Wand (61c; 62c) angeordnet ist, wobei Dehnungsmessstreifen geeignet ist, eine Verformung der verdünnten Wand zu detektieren, und dass die Befestigungsmittel (4, 11) umfassen:
- eine Befestigungsplatte (4), die an einem mit Gewinde versehenen Ende (6f) der instrumentierten Schraube (6) positioniert ist, abstützend gegen die Trägerstruktur (34) des Luftfahrzeugs oder den Lastpfad (36), und die sich senkrecht zur Achse (X6) der Schraube (6) erstreckt, und
- eine Mutter (11), die an dem mit Gewinde versehenen Ende (6f) der instrumentierten Schraube (6) angeordnet ist und die geeignet ist, die instrumentierte Schraube (6) in Bezug auf die Trägerstruktur (34) des Luftfahrzeugs oder den Lastpfad (36) festzulegen, an der bzw. dem sich die Befestigungsplatte (4) abstützt.

2. System (S) zur Steuerung eines Flugorgans nach Anspruch 1, **dadurch gekennzeichnet, dass** die oder jede Messzone (61; 62) zwei Dehnungsmessstreifen (71a, 71b; 72a, 72b) umfasst, die jede an einer Seite der verdünnten Wand (61c; 62c) angeordnet sind, die eine orthogonale Ebene zu einer Scherebene (PC1; PC2) für die instrumentierte Schraube (6) bildet.

3. System (S) zur Steuerung eines Flugorgans nach einem der vorhergehenden Ansprüche, **dadurch gekennzeichnet, dass** es zwei Messzonen (61; 62) umfasst, die in Scherebenen (PC1; PC2) für die Schraube (6) lokalisiert sind, entlang der instrumentierten Schraube (6) aufeinanderfolgen und jeweils an den zwei ebenen Verbindungsstellen zwischen der Trägerstruktur (34) des Luftfahrzeugs und des Lastpfades (36) angeordnet sind.

4. System zur Steuerung eines Flugorgans nach einem der vorhergehenden Ansprüche, **dadurch gekennzeichnet, dass** die instrumentierte Schraube (6) mindestens eine Abflachung (641, 642) aufweist, die zwischen dem mit Gewinde versehenen Ende (6f) und der Messzone (62), die am nächsten zu diesem mit Gewinde versehenen Ende (6f) liegt, angeordnet ist, wobei der Bereich der Schraube (6), der die mindestens eine Abflachung (641, 642) aufweist, geeignet ist, in einer komplementären Öffnung (460) der Befestigungsplatte (4) aufgenommen zu werden, derart, dass die instrumentierte Schraube (6) drehfest in Bezug auf die Befestigungsmittel (4, 11) blockiert ist und dass die Scherspannungen, die auf die instrumentierte Schraube (6) durch das Festziehen der Mutter (11) ausgeübt werden, im Wesentlichen zwischen der Schulter (640) und der Mutter (11) außerhalb der oder den Messzonen (61; 62) lokalisiert sind.

5. System zur Steuerung eines Flugorgans nach einem der vorhergehenden Ansprüche, **dadurch gekennzeichnet, dass** die instrumentierte Schraube (6) eine Querschulter (640) aufweist, die zwischen dem mit Gewinde versehenen Ende (6f) und der Messzone (62), die am nächsten zu diesem mit Gewinde versehenen Ende (6f) liegt, angeordnet ist, wobei die Schulter (640) geeignet ist, sich gegen die Befestigungsplatte (4) abzustützen, derart, dass die instrumentierte Schraube (6) translatorisch in Bezug auf die Befestigungsmittel (4, 11) blockiert ist und dass die Scherspannungen auf die instrumentierte Schraube (6), die durch das Festziehen der Mutter (11) erzeugt werden, im Wesentlichen zwischen der Schulter (640) und der Mutter (11) außerhalb der oder den Messzonen (61; 62) lokalisiert sind.

6. System zur Steuerung eines Flugorgans nach einem der vorhergehenden Ansprüche, **dadurch gekennzeichnet, dass** es ebenfalls eine zweite instrumentierte Schraube umfasst, die sich gemäß einer Achse parallel zur Achse (X6) der ersten instrumentierten Schraube (6) erstreckt und die die Trägerstruktur (34) des Luftfahrzeugs und den Lastpfad (36) verbindet.

7. System zur Steuerung eines Flugorgans nach einem der Ansprüche 1 bis 5, **dadurch gekennzeichnet, dass** es auch umfasst:
- eine nicht instrumentierte Schraube (7), die sich gemäß einer Achse (X7) parallel zur Achse (X6) der ersten instrumentierten Schraube (6) erstreckt und die die Trägerstruktur (34) des Luftfahrzeugs und den Lastpfad (36) miteinander verbindet, und
- eine Mutter (10), die an einem mit Gewinde versehenen Ende (7f) der nicht instrumentierten Schraube (7) angeordnet ist und die geeignet ist, die Befestigungsplatte (4) gegen die Trägerstruktur (34) des Luftfahrzeugs oder den Lastpfad (36), an der bzw. dem sich die Befestigungsplatte (4) abstützt, festzulegen, und die geeignet ist, den wesentlichen Teil der Spannbeanspruchungen der Platte (4) aufzunehmen.

8. System zur Steuerung eines Flugorgans nach Anspruch 7, **dadurch gekennzeichnet, dass** die Mutter (11) der instrumentierten Schraube (6) und die Mutter (10) der nicht instrumentierten Schraube (7) unterschiedliche Gewindesteigungen aufweisen, aber geeignet sind, unter der Wirkung eines im Wesentlichen gleichen Festziehmoments verriegelt zu werden.

9. System zur Steuerung eines Flugorgans nach einem der vorhergehenden Ansprüche, **dadurch gekennzeichnet, dass** es gleichfalls ein Gehäuse (1) umfasst, in dem in im Wesentlichen abgedichteter Weise eine elektronische Karte (3) angeordnet ist, die an den oder die Dehnungsmessstreifen (71a, 71b; 72a, 72b) angeschlossen ist, und sich außerhalb desselben der wesentliche Teil der instrumentierten Schraube (6) und gegebenenfalls der wesentliche Teil der nicht instrumentierten Schraube (7) erstreckt.

10. System zur Steuerung eines Flugorgans nach Anspruch 9, **dadurch gekennzeichnet, dass** das Innere der instrumentierte Schraube (6) eine Mehrzahl von Durchgangsöffnungen (651, 652, 661, 662) einschließt, in denen Verbindungsleitungen angeordnet sind, die den oder die Dehnungsmessstreifen (71a, 71b; 72a, 72b) und die elektronische Karte (3), die in dem Gehäuse (1) angeordnet ist, miteinander verbinden, mit:
- einer Längsöffnung (651, 652), die sich parallel zur ersten Achse (X6) erstreckt und gegebenenfalls die Messzonen (61; 62) miteinander verbindet, und
- einer Queröffnung (661; 662) in jeder Messzone (61; 62), die die Dehnungsmessstreifen (71a, 71b; 72a, 72b), die in den entsprechenden Kavitäten (61a, 61b; 62a, 62b) angeordnet sind, mit der Längsöffnung (651, 652) verbindet.

11. System zur Steuerung eines Flugorgans nach einem der Ansprüche 9 oder 10, **dadurch gekennzeichnet, dass** das Gehäuse (1) einen herausspringenden Drehknopf (18) aufweist, wobei der Drehknopf geeignet ist, von einer Bedienperson in der Weise betätigt zu werden, dass die Funktionsweise des Systems (S) getestet werden kann.

12. System zur Steuerung eines Flugorgans nach Anspruch 11, **dadurch gekennzeichnet, dass** das Gehäuse (1) Anzeigemittel (27), zum Beispiel eine Anzeigeplatte, aufweist, die geeignet sind, das Ergebnis des mit Hilfe des Knopfes (18) durchgeführten Tests anzuzeigen.

13. System zur Steuerung eines Flugorgans nach einem der Ansprüche 9 bis 12, **dadurch gekennzeichnet, dass** es gleichfalls eine elastische Scheibe (15) umfasst, die in dem Gehäuse (1) zwischen dem Kopf (6t) der instrumentierten Schraube (6) und dem Gehäuse (1) positioniert wird und die geeignet ist, einerseits die Schwingungen in dem Gehäuse (1) zu dämpfen und andererseits die instrumentierte Schraube (6) axial zu halten.

14. Flugsteuerungsvorrichtung, insbesondere für ein Flossenstellsystem vom THSA-Typ, umfassend:
- einen Primärlastpfad (PLP), der geeignet ist, die im normalen Betrieb auf eine Befestigung eines Flugstellgliedes ausgeübte Last aufzunehmen, und
- einen Sekundärlastpfad (SLP), der geeignet ist, die Last im Fall eines Ausfalls des Primärpfades aufzunehmen,
wobei die Vorrichtung **dadurch gekennzeichnet ist, dass** der Sekundärlastpfad (SLP) ein System zur Steuerung eines Flugorgans nach einem der vorhergehenden Ansprüche umfasst.

15. Verwendung eines Systems (S) zur Steuerung eines Flugorgans nach einem der Ansprüche 1 bis 13 für die Ersetzung eines vorexistierenden Systems, das einen Sekundärlastpfad (SLP) ausrüstet, der an einer Befestigung eines Flugsteuerstellgliedes angeordnet ist, insbesondere um eine vorexistierende Befestigungsschraube zu ersetzen, die eine Trägerstruktur (34) eines Luftfahrzeugs und den Sekundärlastpfad (SLP) durch eine instrumentierte Befestigungsschraube (6) verbindet, ohne Modifikation der Befestigung des Flugsteuerstellgliedes.
